Europäisches Patentamt

European Patent Office

Office européen des brevets

(11) Publication number: **0 068 041**
**B1**

# EUROPEAN PATENT SPECIFICATION

(45) Date of publication of patent specification: **21.08.85**

(51) Int. Cl.⁴: **A 01 N 25/04**

(21) Application number: **81105074.9**

(22) Date of filing: **30.06.81**

(54) Flowable herbicide and pesticide compositions and their use.

(43) Date of publication of application:
**05.01.83 Bulletin 83/01**

(45) Publication of the grant of the patent:
**21.08.85 Bulletin 85/34**

(84) Designated Contracting States:
**BE CH DE FR GB IT LI NL SE**

(56) References cited:
**EP-A-0 007 112**
**US-A-2 194 218**

(73) Proprietor: **J.T. Baker Chemical Co.**
**222 Red School Lane**
**Phillipsburg, New Jersey 08865 (US)**

(72) Inventor: **Kaufman, Harold A.**
**142 Fountain Avenue**
**Piscataway New Jersey (US)**

(74) Representative: **Vossius Vossius Tauchner**
**Heunemann Rauh**
**Siebertstrasse 4 P.O. Box 86 07 67**
**D-8000 München 86 (DE)**

Courier Press, Leamington Spa, England.

## Description

This invention relates to aluminum hydroxide (unreactive) flowable gel pesticide and herbicide compositions and to the preparation thereof.

Background of the invention

Commercially available herbicide and pesticide formulations are generally in the form of wettable powders, dusts or granules. However, such formulations are not always desirable as they present problems in handling of the formulations and are particularly irritating to the grower-user. Moreover, many herbicide and pesticide active ingredients are difficult to suspend and thus do not lead to easily produced formulations of the type mentioned. In addition, in the past certain active ingredients that are insoluble organic acids were formed as dialkylamine salts in order to obtain the necessary suspension of the product. However, such dialkylamine salts have the potential of forming highly undesirable nitroso amine derivatives in the environment.

It is, therefore, highly desirable to obtain herbicide and pesticide formulations which avoid one or more of these disadvantages of prior art formulations. Moreover, it would also be advantageous to provide such new and improved herbicide and pesticide formulations which, in addition to avoiding one or more of the prior art problems, also leads to formulations that may possess one or more additional advantages over the prior art formulations.

It has been proposed in the earlier European application 79 102 486.2 (EP—A—0 007 112) to obtain such flowable formulations by the use of aluminum hydroxide gel as the suspending agent. However, the use of aluminum hydroxide for the preparation of formulations containing active ingredients such as 2,4-D(2,4-dichlorophenoxyacetic acid), dicamba and the like in their free acid form is not entirely suitable and in some cases undesirable because of the chemical reaction that occurs between the acid function of the active ingredient and the aluminum hydroxide. This reaction can cause the initially flowable suspension to set up into a relatively hard mass that is difficult to resuspend and is not an acceptable formulation. In addition, such reaction causes a substantial portion of the active ingredient to be converted to its aluminum salt.

In US—A—2 194 218 there are disclosed aqueous emulsions employing activated gelatinous alumina in contradistinction to the use of inactivated aluminum hydroxide gels according to the present invention. Additionally the invention resides in the use of the inactivated gel with herbicides and pesticides in their free acid form, a form in which the above mentioned problem of reaction occurs. This problem is eliminated in the present invention.

Summary of the invention

It has now been discovered that acceptable new and improved flowable herbicide and pesticide formulations of active ingredients in their free acid form may be formed by combining active ingredients in the form of organic acid and of suitable particle size with unreactive aluminum hydroxide gels. It has been found that such unreactive aluminum hydroxide gel herbicide and pesticide formulations in addition to eliminating one or more of the disadvantages of prior formulations also provides formulations that may possess one or more of the following advantages. Formulations of this invention when compared to prior formulations have been shown to possess and retain superior suspending properties, improved crop tolerance, improved control of selected weed species, better handling characteristics than dry dusty wettable powders, an environmental safety advantage over emulsifiable concentrates containing volatile organic carriers and enhanced desiccation defoliation action thereby reducing the amount of pesticide required as a harvest aid.

Detail description of the invention

A broad range of novel herbicide and pesticide formulations in flowable form are provided according to this invention by mixing the active ingredients in their organic acid form and of suitable particle size with unreactive aluminum hydroxide gels.

The formulations of the invention are generally prepared by incorporating the appropriate quantity of the active ingredient along with any desired freeze thaw agent, water, and suitable wetting, dispersing and antifoam agents into any suitable mill, or homogenizer such as, for example, an attritor or ball mill, where the ingredients are initimately and homogeneously mixed and the particle size of the herbicide or pesticide is reduced to the desirable particle size range, generally from 2 to 5 μm average particle diameter. The mixture, of desired particle size, is then removed from the mill and unreactive aluminum hydroxide gel combined therewith with mixing to yield a generally fluid, homogeneous, very slow settling suspension. Alternatively, the unreactive aluminum hydroxide gel can, if desired, be added directly to the mill for a brief period after the correct toxicant particle size is reached.

Generally unreactive aluminum hydroxide gel, containing approximately 2 to 20%, preferably 6 to 15% by weight aluminum hydroxide, is employed as the suspending agent at a concentration range of 5 to 30%, preferably 15 to 25% by weight. The unreactive aluminum hydroxide gel can be used as the sole suspending agent or in combination with other suspending agents, such as for example, methylcellulose, hydroxypropylmethylcellulose, magnesium hydroxide gel, bentonite, Veegum, attapulgite clays and

2

hydroxypropyl guar. The unreactive aluminum hydroxide concentration in compositions of this invention are generally in the range of 0.10 to 6.0% by weight aluminum hydroxide (that is, 0.065 to 3.9% by weight $Al_2O_3$).

The unreactive aluminum hydroxide gel of this invention which enables active ingredients in their free acid form to be formulated into flowable suspensions is generally prepared by heating a reactive gel suspension of about 4% $Al_2O_3$ concentration at an elevated temperature with good mixing for sufficient time to effect the conversion to unreactive gel.

A suitable starting material for this preparation is a reactive aluminum hydroxide gel such as defined by the U.S.P. XIX. The acid-consuming capacity (ACC) is one measure of the reactivity of aluminum hydroxide gels. The U.S.P. XIX ACC specification is 12.5 to 25.0 ml of 0.1N hydrochloric acid for one gram of 4% $Al_2O_3$ gel. The theoretical ACC for a completely reactive gel is 23.5 ml and most so-called "reactive" gels typically, show 23.0 to 25.0 ml ACC values. Any excess ACC above the theoretical 23.5 ml value is generally attributed to residual amounts of basic aluminum carbonate and bicarbonate and possible sodium bicarbonate. By comparison, the ACC of the unreactive aluminum hydroxide gel of this invention is only about 1.5 ml, indicating that it is about 94% unreactive by the USP test.

The preferred reactive aluminum hydroxide gel concentration is about 4% $Al_2O_3$ content. Although higher concentrations up to possibly 6% $Al_2O_3$ could be used, the suspension becomes very viscous during the conversion process and maintaining a fluid, agitated suspension at this concentration can be difficult. Concentrations below 4% $Al_2O_3$ can be utilized; however, since the unreactive gel is typically used at a 4% or higher assay, an extra concentration step would be required.

Typical reactive gels are neutral to slightly basic with pH values in the range of 6.5—8.0; these are also suitable pH values for the conversion to unreactive product. It has also been found that the process can be carried out at least up to pH 9.5.

The typical time/temperature conditions used to effect the preparation of unreactive gel is about six hours at 80°C. However, it has also been found that conversion can be completed in only four hours at 80°C on a laboratory scale.

The unreactive gel can be used as is at the 4% $Al_2O_3$ concentration for incorporation into active ingredient formulations or dewatered to yield a thick paste-like product with about 10% $Al_2O_3$ content. The use of this suspending agent in the preparation of flowable formulations is given in the Illustrative Examples section of this disclosure.

The unreactive aluminum hydroxide gel of this invention differs from typical reactive gels in a number of ways besides the obvious feature of its ability to function as a suspending agent for active ingredients in their free acid form. During the transformation from reactive to unreactive aluminum hydroxide, the gel changes from white to an offwhite appearance. It also undergoes a viscosity increase at this time. This viscosity change is visibly apparent in that a 6% $Al_2O_3$ concentration of reactive gel is a fluid suspension, whereas this concentration of unreactive gel results in a thick nearly non-pourable gel. Also, the relative viscosity values of 4% $Al_2O_3$ suspensions were 1200 mPas and 4200 mPas for reactive and unreactive gels, respectively.

A key property of the unreactive gel of this invention is its unexpectedly good suspending properties. Aged aluminum hydroxide gels that are unreactive toward 0.1N hydrochloric acid generally exhibit poorer suspension characteristics than reactive gels. Aging of aluminum hydroxide gels, such as by heating under high alkaline conditions (greater than pH 9) or simply by allowing the gel to age at room temperature for a prolonged time, generally results in its transformation from an amorphous to a crystalline non-reactive material. Preparation of crystalline aluminum hydroxide can also be prepared by direct precipitation at high pH and temperature. Such products usually do not possess suitable suspension properties. The particular conditions under which unreactive gel is prepared as described herein apparently allows the gel to be rendered unreactive toward 0.1N hydrochloric acid and also active ingredients in their free acid form but still retain good suspending properties. This may be due to a complex polymerization process that stops short of converting the gel to a crystalline state.

Any suitable freeze thaw agent can be employed in the flowable compositions of this invention and is generally present in an amount of from 1 to 10% by weight. Among such suitable freeze thaw agents there can be mentioned, for example, urea, polyhydric alcohols such as glycerol, sorbitol, mannitol, ethylene glycol, propylene glycol, polyethylene glycol, glucose, sucrose as well as water soluble nontoxic polymeric agents such as dextran, polyvinylpyrrolidone. Preferred for use in the compositions of this invention is propylene glycol.

Any suitable wetting and dispersing agents may be used in the flowable compositions of this invention and are generally employed in an amount of from 0.1 to 6% by weight. Exemplary of suitable wetting and dispersing agents there can be mentioned, for example, non-ionic aromatic polyethylene glycol ethers, such as Antarox® A-400, alkyl aryl polyether alcohol type emulsifiers such as Triton® X-100, sulfonated purified lignins such as Reax® 45A and Reax® 45L and a fine mesh, high viscosity, hydroxypropyl guar such as Jaguar® HP-8.

Suitable antifoam agents when employed are used in an amount of from 0.1 to 0.5% by weight. Any suitable antifoam agent can be employed such as, for example, a 50% by weight solution of 2,4,7,9 - tetramethyl - 5 - decyn - 4,7 - diol known as Surfynol® 104-E.

As examples of herbicides and pesticides in their organic acid form that may be employed in formulations of this invention there may be mentioned, for example, 3,6 - dichloro - 2 - methoxybenzoic acid, 2,3,6 - trichlorobenzoic acid, 2,3,5,6 - tetrachlorobenzoic acid, triiodobenzoic acid, 3 - nitro - 2,5 - dichlorobenzoic acid, 2,4 - dichloro - 3 - nitrobenzoic acid, 3 - amino - 2,5 - dichlorobenzoic acid, naphthaleneacetic acid, indolebutyric acid, 3,6 - endoxohexahydrophthalic acid, α - naphthylphthalamic acid, trichloroacetic acid, 2,2 - dichloropropionic acid, 2,3 - dichloropropionic acid, 2,2,3 - trichloropropionic acid, 4 - chlorophenoxyacetic acid, 2,4 - dichlorophenoxyacetic acid, 2,4,5 - trichlorophenoxyacetic acid, 2 - methoxy - 3,6 - dichlorophenylacetic acid, 3 - methoxy - 2,6 - dichlorophenylacetic acid, 2 - methoxy - 3,5,6 - trichlorophenylacetic acid, β - naphthoxyacetic acid, 3 - chlorophenoxypropionic acid, 2,4 - dichlorophenoxypropionic acid, 2 - methyl - 4 - chlorophenoxypropionic acid, 2,4,5 - trichlorophenoxypropionic acid, 2,4 - dichlorophenoxybutyric acid, 2 - methyl - 4 - chlorophenoxybutyric acid, 2,4,5 - trichlorophenoxybutyric acid, 4 - chloro - 2 - oxobenzothiozolin - 3 - yl acetic acid, and 4 - amino - 3,5,6 - trichloropicolinic acid. It will be appreciated that the foregoing examples are merely exemplary of the many free acid form herbicidal and pesticidal active ingredients that may be formulated in the compositions of this invention. In the formulations of this invention the active ingredient will generally be present in an amount of from 0.06 to 0.96 g and preferably 0.36 to 0.6 g of active ingredient per ml of formulation.

The compositions can also comprise such additional substances as other herbicides, pesticides, such as insecticides, nematocides, fungicides; stabilizers, spreaders, deactivators, adhesives, stickers, fertilizers, activators, and synergists. That is, the compositions of the present invention are also useful when other herbicides, pesticides and/or defoliants, dessicants, growth regulants are also included in the herbicidal and pesticidal compositions heretofore described. These other materials can comprise from 5% to 95% of the active ingredients in the herbicidal compositions. Use of combinations of these other herbicides, pesticides, and/or defoliants, desiccants, etc. with the compounds of the present invention provide herbicidal compositions which are more effective in controlling weeds and often provide results unattainable with separate compositions of the individual herbicides and pesticides. The other herbicides, defoliants, desiccants and plant growth regulants which can be used as compositions of this invention can include chlorophenoxy herbicides such as 4(2,4-DB), 2,4-DEB, 4-CPB, 4-CPA, 4-CPP, 2,4,5-TES, 3,4-DA and silvex; carbamate herbicides such as IPC, CIPC, swep, barban, BCPC, CEPC, CPPC; thiocarbamate and dithiocarbamate herbicides such as CDEC, metham sodium, EPTC, diallate, PEBC, perbulate, vernolate; substituted urea herbicides such as norea, siduron, dichloral urea, chloroxuron, cycluron, fenuron, monuron, monuron TCA, diuron, linuron, monolinuron, neburon, buturon, trimeturon; symmetrical triazine herbicides such as simazine, chlorazine, atratone, desmetryne, norazine, ipazine, prometryn, trietazine, simetone, prometone, propazine, ametryne; chloroacetamide herbicides such as alpha - chloro - N,N - dimethylacetamide, CDEA, CDAA, alpha - chloro - N - isopropylacetamide, 2 - chloro - N - isopropylacetanilide, 4 - (chloroacetyl)morpholine, 1 - (chloroacetyl)piperidone; chlorinated aromatic acid herbicides such as sodium 5 - [2 - chloro - 4 - (trifluoromethyl) - phenoxy] - nitrobenzoate; and such compounds as aminotriazole, maleic hydrazide, phenyl mercuric acetate, endothal, biuret, technical chlordane, dimethyl 2,3,5,6 - tetrachloroterephthalate, diquat, erbon, DNC, DNBP, dichlobenil, DPA, diphenamid, dipropalin, trifluralin, solan, dicryl, merphos, DMPA, DSMA, MSMA, potassium azide, acrolein, benefin, bensulide, AMS, bromacil, 2(3,4 - dichlorophenyl) - 4 - methyl - 1,2,4 - oxabdiazolidine - 3,5 - dione, bromoxynil, cacodylic acid, CMA, CPMF, cypromid, DCB, DCPA, dichlone, diphenatril, DMTT, DNAP, EBEP, EXD, HCA, ioxynil, IPX, isocil, potassium cyanate, MAA, MAMA, MCPES, MCPP, MH, molinate, NPA, OCH, paraquat, PCP, picloram, DPA, PCA, pyrichlor, sesone, terbacil, terbutol, TCBA, brominil, CP-50144, H-176-1, H-732, M-2901, planavin, sodium tetraborate, calcium cyanamide, DEF, ethyl xanthogen disulfide, sindone, sindone B, and propanil.

Such herbicides and pesticides can also be used in the compositions of this invention in the form of their salts, esters, amides and other derivatives whenever applicable to the particular parent compounds.

The flowable system of this invention provides a unique liquid carrier and suspension system which obviates the need for the preparation of dialkylamine salts which have the potential of forming undesirable nitroso amine derivatives. Moreover, when formulated as a flowable composition of this invention the active ingredient will generally exhibit improved herbicidal or pesticidal performance over use of the free acid according to prior art compositions.

As examples of formulations according to this invention reference may be had to the following illustrative examples.

Example 1

Aluminum hydroxide gel, a reactive gel conforming to USP XIX specifications, was diluted to 4% Al₂O₃ content with deionized water. The suspension was agitated and brought to 80°C and maintained at that temperature for about six hours. The total volume was maintained approximately constant by periodic water additions, as necessary, to replace water lost by evaporation. After six hours, the suspension was cooled to room temperature and incorporated into a flowable pesticide formulation as follows.

Into an Attritor model 01 mill containing about 1.81 kg of 3.17 mm stainless-steel balls were added 100 g water and 8.9 g propylene glycol. The mill was activated and 6.7 g Reax® 45A and 191 g 2,4-D (2,4-dichlorophenoxy acetic acid) were alternately added over about a 5 minute period. Milling continued until the 2,4-D particle size was reduced to 3—5 μm average particle diameter. The mixture was removed from the mill and the appropriate amount of unreactive aluminum hydroxide gel, Jaguar® HP-8 initially hydrated with water and water were added and blended thoroughly to give a stable, flowable suspension with the following composition:

| Component | Weight % |
|---|---|
| 2,4-D | 43.0 |
| Reax® 45-A | 1.5 |
| Propylene Glycol | 2.0 |
| Aluminum Hydroxide Gel (10% $Al_2O_3$ assay) | 9.0 |
| Jaguar® HP-8 | 0.2 |
| Antifoam agent | 0.1 |
| Water | 44.2 |
| | 100.0 |

Example 2

Two hundred grams of a reactive aluminum hydroxide gel containing 10% $Al_2O_3$ was diluted with 300 grams of deionized water and thoroughly mixed to prepare a 4% $Al_2O_3$ suspension. With continuous agitation, the suspension was brought to 80°C and maintained at that temperature for six hours. Periodic additions of water were made in order to replace the water lost through evaporation. The inactivated gel was then removed from the heat source, cooled to room temperature, and filtered to remove the free water and yield a viscous gel containing about 10% $Al_2O_3$.

A formulation containing the inactive aluminum hydroxide gel as a suspending agent for dicamba was prepared in the following manner. Appropriate amounts of dicamba, water, propylene glycol and Reax® 45A wetting-dispersing agent were added to an Attritor model 01 mill containing 3.17 mm stainless-steel balls and milled until the dicamba particle size was reduced to 3—5 μm average particle diameter. The mixture was removed from the mill and unreactive aluminum hydroxide gel, Jaguar® HP-8 and water were added and the mixture thoroughly blended to give a flowable suspension having the following composition:

| Component | Weight % |
|---|---|
| Dicamba | 37.5 |
| Reax® 45A | 1.0 |
| Propylene Glycol | 1.8 |
| Aluminum Hydroxide Gel (10% $Al_2O_3$ assay) | 9.0 |
| Jaguar® HP-8 | 0.1 |
| Surfynol® 104E (Trademark of Airco Chemicals and Plastics, U.S.A.) | 0.1 |
| Water | 50.5 |
| | 100.0 |

The improved suspending properties of the unreactive gel of this invention over reactive gel from which it is prepared can be seen from the following comparison. Suspensions of reactive and unreactive gels at 1.8% $Al_2O_3$ concentration were prepared by diluting the approximately 10% $Al_2O_3$ starting gels with deionized water and thoroughly mixing to obtain a homogenous suspension. The suspensions were allowed to stand at room temperature and the amount of aluminum hydroxide remaining in suspension was measured periodically.

The following results were obtained:

|  | % Gel suspended | | |
|  | 1 Week | 2 Weeks | 7 Weeks |
| --- | --- | --- | --- |
| Reactive Gel | 74 | 71 | 69 |
| Unreactive Gel | 95 | 95 | 95 |

It can be seen that about 38% more unreactive gel remains in suspension than reactive gel after standing for seven weeks.

## Claims

1. A flowable toxicant composition comprising an active ingredient selected from a herbicide or a pesticide in its free acid form and from 5 to 30% by weight unreactive aluminum hydroxide gel having an acid consuming capacity (ACC) of about 1.5 ml.

2. The composition of claim 1 wherein there is present a freeze thaw agent, a wetting and a dispersing agent.

3. The composition of claim 2 wherein there is present an antifoam agent.

4. The composition of claim 3 wherein the freeze thaw agent is present in an amount of from 1 to 10% by weight and is selected from urea, glycerol, sorbitol, mannitol, ethylene glycol, propylene glycol, polyethylene glycol, glucose, sucrose, dextran and polyvinylpyrrolidone.

5. The composition of claim 4 wherein the wetting and dispersing agent is present in an amount of from 0.1 to 6% by weight and is selected from non-ionic aromatic polyethylene glycol ethers, alkylaryl polyether alcohols and sulfonated purified lignins.

6. The composition of claim 5 wherein the antifoam agent is present in an amount of from 0.1 to 0.5% by weight.

7. The composition of claim 6 wherein the antifoam agent is a 50% by weight solution of 2,4,7,9 - tetramethyl - 5 - decyn - 4,7 - diol.

8. The composition of claim 1 wherein the particle size of the active ingredient is from 2 to 5 μm average particle diameter.

9. The composition of claim 8 wherein the active ingredient is selected from 2,4-D (2,4-dichlorophenoxyacetic acid) and dicamba.

10. The composition of claim 8 wherein the active ingredient is present in an amount of from 0.06 to 0.96 g per ml of composition.

11. The composition of claim 8 which is

| Component | Weight % |
| --- | --- |
| 2,4-D | 43% |
| Reax® 45A (a lignosulfonate wetting/dispersing agent) | 1.5 |
| Propylene glycol | 2 |
| Aluminum hydroxide gel (10% $Al_2O_3$ assay) | 9.0 |
| Jaguar® HP-8 (hydroxypropyl guar) | 0.2 |
| Antifoam agent | 0.1 |
| Water | 44.2 |
|  | 100.0 |

6

12. The composition of claim 8 which is

| Component | Weight % |
|---|---|
| Dicamba | 37.5% |
| Reax® 45A | 1.0 |
| Propylene glycol | 1.8 |
| Aluminum hydroxide gel (10% $Al_2O_3$ assay) | 9.0 |
| Jaguar® HP-8 | 0.1 |
| Surfynol® 140E (50% by weight solution of 2,4,7,9-tetramethyl-5-decyn-4,7-diol) | 0.1 |
| Water | 50.5 |
| | 100.0 |

13. Use of the compositions according to each of claims 1 to 12 as herbicides and/or pesticides.

**Patentansprüche**

1. Fließfähige toxische Zusammensetzung, enthaltend einen wirksamen Bestandteil aus der Gruppe der Herbizide oder Pestizide in der freien Säureform sowie 5—30 Gew.-% nichtreaktives Aluminiumhydroxidgel mit einer Säurebindungskapazität (SBK) von etwa 1,5 ml.

2. Zusammensetzung nach Anspruch 1, enthaltend ein Gefrierschutzmittel, ein Benetzungsmittel und ein Dispergiermittel.

3. Zusammensetzung nach Anspruch 2, enthaltend ein Schaumverhütungsmittel.

4. Zusammensetzung nach Anspruch 3, dadurch gekennzeichnet, daß das Gefrierschutzmittel in einer Menge von 1—10-Gew. % enthalten ist und aus der nachstehenden Gruppe gewählt ist: Harnstoff, Glycerin, Sorbit, Mannit, Äthylenglykol, Propylenglykol, Polyäthylenglykol, Glucose, Saccharose, Dextran und Polyvinylpyrrolidon.

5. Zusammensetzung nach Anspruch 4, dadurch gekennzeichnet, daß das Benetzungs- und Dispergiermittel in einer Menge von 0,1—6 Gew.-% enthalten sind und aus der nachstehenden Gruppe gewählt sind: Nichtionische aromatische Polyäthylenglykoläther, Alkylaryl-polyäther-alkohole und sulfonierte gereinigte Lignine.

6. Zusammensetzung nach Anspruch 5, dadurch gekennzeichnet, daß das Schaumverhütungsmittel in einer Menge von 0,1—0,5 Gew.-% enthalten ist.

7. Zusammensetzung nach Anspruch 6, dadurch gekennzeichnet, daß das Schaumverhütungsmittel eine Lösung von 50 Gew.-% 2,4,7,9 - Tetramethyl - 5 - decyn - 4,7 - diol ist.

8. Zusammensetzung nach Anspruch 1, dadurch gekennzeichnet, daß die Teilchengröße des wirksamen Bestandteils einen durchschnittlichen Teilchendurchmesser von 2—5 µm aufweist.

9. Zusammensetzung nach Anspruch 8, dadurch gekennzeichnet, daß der wirksame Bestandteil 2,4-D-(2,4-dichlorphenoxyessigsäure) oder Dicamba (3,6-Dichlor-o-anissäure) ist.

10. Zusammensetzung nach Anspruch 8, dadurch gekennzeichnet, daß der wirksame Bestandteil in einer Menge von 0,06—0,96 g pro ml Zusammensetzung enthalten ist.

11. Zusammensetzung nach Anspruch 8, nämlich:

# 0 068 041

| Bestandteil | Gew.-% |
|---|---|
| 2,4-D | 43 |
| Reax® 45A (ein Lignosulfonat-Benetzungs/ Dispergiermittel) | 1,5 |
| Propylenglykol | 2 |
| Aluminiumhydroxidgel (10% $Al_2O_3$ Gehalt) | 9,0 |
| Jaguar® HP-8 (Hydroxypropylguar) | 0,2 |
| Schaumverhütungsmittel | 0,1 |
| Wasser | 44,2 |
| | 100,0 |

12. Zusammensetzung nach anspruch 8, nämlich:

| Bestandteil | Gew.-% |
|---|---|
| Dicamba | 37,5 |
| Reax® 45A | 1,0 |
| Propylenglykol | 1,8 |
| Aluminiumhydroxidgel (10% $Al_2O_3$ Gehalt) | 9,0 |
| Jaguar® HP-8 | 0,1 |
| Surfynol® 140E (50 Gew.-%-Lösung 2,4,7,9- Tetramethyl-5-decyn-4,7-diol) | 0,1 |
| Wasser | 50,5 |
| | 100,0 |

13. Verwendung der Zusammensetzungen nach einem der Ansprüche 1 bis 12 als Herbizide und/oder Pestizide.

## Revendications

1. Une composition toxique fluide, caractérisée en ce qu'elle comprend un ingrédient actif choisi parmi un herbicide et un pesticide sous sa forme acide libre et de 5 à 30% en poids d'un gel d'hydroxyde d'aluminium inerte ayant une capacité de consommation d'acide (CCA) d'environ 1,5 ml.

2. La composition selon la revendication 1, caractérisée en ce qu'elle contient un agent de congélation-dégel, un agent dispersant et un agent mouillant.

3. La composition selon la revendication 2, caractérisée en ce qu'elle contient un agent antimousse.

4. La composition selon la revendication 3, caractérisée en ce qu'elle contient un agent de congélation-dégel en quantité de 1 à 10 % en poids et qui est choisi parmi l'urée, le glycérol, le sorbitol, le mannitol, l'éthylèneglycol, le propylèneglycol, le polyéthylèneglycol, le glucose, le saccharose, le dextranne et la polyvinyl-pyrrolidone.

5. La composition selon la revendication 4, caractérisée en ce que l'agent dispersant et mouillant est présent en quantité de 0,1 à 6 % en poids et est choisi parmi les éthers aromatiques de polyéthylèneglycol non ioniques, les alkylàrylpolyétheralcools et les lignines purifiées sulfonatées.

6. La composition selon la revendication 5, caractérisée en ce que l'agent antimousse est présent en quantité de 0,1 à 0,5 % en poids.

8

**0 068 041**

7. La composition selon la revendication 6, caractérisée en ce que l'agent antimousse est une solution à 50 % en poids de 2,4,7,9-tétraméthyl-5-décyne-4,7-diol.

8. La composition selon la revendication 1, caractérisée en ce que la taille des particules de l'ingrédient actif correspond à un diamètre de particules moyen de 2 à 5 µm.

9. La composition selon la revendication 8, caractérisée en ce que l'ingrédient actif est choisi parmi le 2,4-D (acide 2,4 - dichlorophénoxyacétique) et le dicamba.

10. La composition selon la revendication 8, caractérisée en ce que l'ingrédient actif est présent en quantité de 0,06 à 0,96 g par ml de composition.

11. La composition selon la revendication 8 qui est:

| Composant | Poids % |
|---|---|
| 2,4-D | 43% |
| Reax® 45A (agent dispersant mouillant du type lignosulfonate) | 1,5 |
| Propylèneglycol | 2 |
| Gel d'hydroxyde d'aluminium (dosé à 10 % d'Al$_2$O$_3$) | 9,0 |
| Jaguar® HP-8 (hydroxypropyl-guar) | 0,2 |
| Agent antimousse | 0,1 |
| Eau | 44,2 |
| | 100,0 |

12. La composition selon la revendication 8 qui est:

| Composant | Poids % |
|---|---|
| Dicamba | 37,5% |
| Reax® 45A | 1,0 |
| Propylèneglycol | 1,8 |
| Gel d'hydroxyde d'aluminium (dosé à 10 % d'Al$_2$O$_3$) | 9,0 |
| Jaguar® HP-8 | 0,1 |
| Surfynol® 140 E (solution à 50 % en poids de 2,4,7,9-tétraméthyl-5-décyne-4,7-diol) | 0,1 |
| Eau | 50,5 |
| | 100,0 |

13. L'emploi des compositions selon l'une quelconque des revendications 1 à 12 comme herbicides et/ou pesticides.

9